# EUROPÄISCHE PATENTSCHRIFT

(11) **EP 0 459 319 B1**
(45) Veröffentlichungstag und Bekanntmachung des Hinweises auf die Patenterteilung: **24.11.1993**
(21) Anmeldenummer: 91108461.4
(22) Anmeldetag: 24.05.1991
(51) Int. Cl.: A01K 31/17, A01K 39/01

(54) **Fallschacht zur Verteilung von rieselfähigem Schüttgut, insbesondere Futtermittel, auf Fütterungsbahnen einer Käfigbatterie für Nutztiere**
Hopper for distributing pulverulent material, in particular feed, in feedtroughs for animal battery cages
Trémie pour distribuer des produits pulvérulents, en particulier des aliments, dans les mangeoires des batteries de cages pour des animaux domestiques

(30) Priorität: 25.05.1990 DE 4016794; 22.06.1990 DE 4019868
(43) Veröffentlichungstag der Anmeldung: 04.12.1991
(73) Patentinhaber: BIG DUTCHMAN GMBH, D-49377 Vechta (DE)
(72) Erfinder: Wienken, August, W-2849 Bakum (DE)
(74) Vertreter: Jabbusch, Wolfgang, Dr.Jur. Jabbusch, Wehser & Lauerwald Patentanwälte

(56) Entgegenhaltungen:
- EP-A- 0 178 738
- US-A- 4 480 588
- MELLER BATTERIES 'THE LAYING BATTERIE' November 1, 1986 , MELLER BATTERIEN GMBH , MELLE (DE)

## Beschreibung

Die Erfindung betrifft einen Fallschacht zur Verteilung von rieselfähigem Schüttgut, insbesondere Futtermittel, auf wenigstens eine, vorzugsweise mehrere übereinander verlaufende, mit einem Fördermittel ausgerüstete Fütterungsbahnen einer ein-, vorzugsweise mehretagigen Käfigbatterien für Nutztiere, insbesondere Geflügel, mit einer oberen Einschüttöffnung und mit horizontalen Schachtwanddurchlässen für jede Fütterungsbahn und mit in den Fallschacht vorstehenden Abweisern, die in Fallrichtung des Schüttgutes geneigt sind.

Ein Fallschacht der vorbezeichneten Gattung ist nach der US-A-44 80 588 bekannt. Bei dem bekannten Fallschacht haben die Abweiser die Funktion von Trennwänden, die, jede für sich, einen Fallbereich innerhalb des Schachtes gegenüber einem anderen Fallbereich abgrenzen, wobei die Fütterungsbahnen durch jeweils einen zugeordneten Fallbereich verlaufen. Jede Fütterungsbahn ist mit einem Fördermittel ausgerüstet, z.B. einer umlaufenden Schleppkette, die das an einem Ende der Fütterungsbahn eingegebene Futtermittel über die gesamte Länge der Fütterungsbahn verteilen kann, damit alle Tiere einer Käfigreihe gleichmäßig mit Futtermittel versorgt werden. Futtermittel wird in die obere Einschüttöffnung des Fallschachtes gegeben. Die Fütterungsbahn erstreckt sich durch Schachtwanddurchlässe, d.h. sie verläuft durch das Innere des Fallschachtes. Im Fallschacht befindliches Futtermittel kann somit vom Fördermittel der Fütterungsbahn aus dem Fallschacht heraus und entlang der Fütterungsbahn verteilt werden. Bei mehretagigen Käfigbatterien erstreckt sich der Fallschacht in der Regel über die gesamte Höhe der Käfigbatterie, so daß mehrere Fütterungsbahnen über den Fallschacht gleichzeitig mit Futtermittel versorgt werden können. Nicht verbrauchtes Futtermittel wird vom umlaufenden Fördermittel wieder zurück in den Fallschacht gedrückt.

Im Fallschacht bzw. in den durch als Trennwände wirkende Abweiser abgeteilten Fallbereichen eines Fallschachtes nach der genannten US-A-44 80 588 befindliches Futtermittel neigt zur Brückenbildung. Die Neigung zur Brückenbildung wird noch verstärkt durch in den Fallschacht zurückgedrücktes unverbrauchtes Futtermittel. Dadurch ist eine sichere und gleichmäßige Nachführung des Futtermittels auf jede Fütterungsbahn nicht gewährleistet. Es ist bekannt, der Brückenbildung bei einem Fallschacht dadurch entgegenzuwirken, daß Rührwerke in den Fallschacht eingebaut werden. Für jede vom Fallschacht versorgte Fütterungsbahn ist ein Rührwerk erforderlich. Jedes Rührwerk erfordert einen zugeordneten Antrieb mit entsprechenden Steuerungen. Rührwerke benötigen für ihren Betrieb entsprechende Energie, die bereitgestellt werden muß. Rührwerke und ihre Antriebe sind Verschleiß unterworfen und bedürfen ständiger Wartung.

Der Erfindung liegt die Aufgabe zugrunde, einen Fallschacht derart auszugestalten, daß auch ohne Verwendung angetriebener Rührwerke eine Brückenbildung vermieden wird.

Ein zur Lösung dieser Aufgabe geschaffener Fallschacht zeichnet sich dadurch aus, daß wenigstens ein Abweiser oberhalb jeder Fütterungsbahn derart angeordnet ist, daß eine freie Kante des Abweisers abstreiferartig an den Rändern der oben offenen Fütterungsbahn anliegt.

Bei dem erfindungsgemäßen Fallschacht sind die Abweiser starre, einfache Bauteile, die in den Fallschacht derart eingesetzt sind, daß sie den Strom des Futtermittels von der oberen Einschüttöffnung bis zur jeweils untersten Fütterungsbahn ständig aus der lotrechten Fallrichtung, in der das Futtermittel nachrutscht, ablenken. Durch diese Ablenkung wird die Neigung zur Brückenbildung herabgesetzt. Durch die Abweiser wird die durch die Gesamthöhe des Fallschachtes bestimmte Höhe der darin befindlichen Futtermittelsäule in einzelne Abschnitte unterteilt, so daß sich der durch das Eigengewicht des Futtermittels in der Futtermittelsäule entstehende Verdichtungsdruck kaum derart auswirken kann, daß Brückenbildung auftritt.

Bei dem erfindungsgemäßen Fallschacht kann auf Rührwerke vollständig verzichtet werden. Der Fallschacht arbeitet betriebssicher und erfordert keine Energie für das Betreiben von Rührwerken. Verschleiß tritt nicht auf, so daß der Fallschacht wartungsfrei ist. Die Herstellungskosten des erfindungsgemäßen Fallschachtes sind mit Vorteil auf ein Minimum reduziert.

Dadurch, daß eine freie Kante jedes Abweisers an den Rändern der zugeordneten oben offenen Fütterungsbahn anliegt, ist unter dem Abweiser ein futtermittelfreier Hohlraum gebildet, mit dem Vorteil, daß von einer Fütterungsbahn zum Fallschacht zurückgeführtes, unverbrauchtes Futtermittel abgestreift wird und im ausgebildeten Hohlraum unbehindert aufgestaut werden kann. Dadurch wird ein gewöhnlich unvermeidbarer Verdichtungseffekt durch zusätzliches Einführen unverbrauchter Futtermittel in den Fallschacht, der die Brückenbildung fördern würde, vermieden.

Jeder Abweiser ist vorzugsweise ein flächiges Plattenteil, das derart angebracht ist, daß es zu etwa 3/4 seines Umfangs von angrenzenden Schachtwänden umgeben ist. Ein Abweiser kann aus einem einfachen Blechzuschnitt bestehen, der so in den Fallschacht eingesetzt wird, daß der freie Querschnitt des Fallschachtes etwa zur Hälfte abgedeckt wird. Damit das Futtermittel im Fallschacht ständig nachrutschen kann, sind die Abweiser in Fallrichtung geneigt. Dabei hat sich ein Neigungswinkel von 20 - 25° zur Schachtwand als zweckmäßig erwiesen. Durch Veränderungen der Neigungswinkel kann eine Anpassung an Eigenschaften, z. B. die Rieselfähigkeit, des jeweils verwendeten Futtermittels vorgenommen werden.

Es hat sich als zweckmäßig erwiesen, mehrere Abweiser alternierend in den Fallschacht vorstehend anzubringen. Die Abweiser bilden dadurch Fallstufen für nachrutschendes Futtermittel. Dabei können die freien Kanten einander jeweils benachbarter Abweiser in Fallrichtung auch überlappt sein.

In jedem Fallschacht sind zweckmäßigerweise zwischen zwei Fütterungsbahnen zwei Abweiser angeordnet. Bei besonders gut rieselfähigem Futtermittel kann auch ein Abweiser ausreichen. Selbstverständlich können auch mehr als zwei Abweiser in einem Bereich zwischen zwei Fütterungsbahnen in einem Fallschacht angebracht sein.

Die Anbringung von aus Blechzuschnitten gebildeten plattenartigen Abweisern ist besonders einfach und wirkungsvoll bei Fallschächten,deren freier Querschnitt vierkantig ist. Bei einem derartigen Fallschacht kann die Wirkung der Abweiser zur Vermeidung von Brückenbildung noch dadurch gesteigert werden, daß jede Fütterungsbahn an einer Schachtwand entlang durch den Fallschacht verläuft. Die Fütterungsbahnen sind somit an einer Seite des Fallschachtes angeordnet und verlaufen nicht durch dessen Zentrum. Diese seitlich versetzte Anordnung der Fütterungsbahnen ist besonders vorteilhaft für die Ausbildung eines Hohlraumes unter dem einer Fütterungsbahn unmittelbar benachbarten Abweiser, da der Hohlraum zusätzlich zur Unterseite des Abweisers noch durch die Schachtwände begrenzt wird, und zwar durch die Schachtwand, von der aus sich der Abweiser in den Fallschacht erstreckt und von der Schachtwand, entlang der die Fütterungsbahn verläuft.

Damit sich auch in der Fütterungsbahn selbst keine Brücke bildet, ist nach einer vorteilhaften Weiterbildung vorgesehen, daß der Rand jeder Fütterungsbahn im Bereich zwischen zugeordneten Schachtwanddurchlässen eine Ausklinkung aufweist, die vorzugsweise bis auf die Höhe des Fördermittels hinabreicht. Die Ausklinkung hat auch den Vorteil, daß überschüssiges Futter, das sich im Honlraum unter dem Abweiser befindet, auch aus dem Rücklauf durch die Ausklinkung seitlich entweichen kann.

Eine Ausführungsbeispiel, aus dem sich weitere erfinderische Merkmale ergeben, ist in der Zeichnung dargestellt. Es zeigen:
Fig. 1 eine schematische Teilansicht eines Fallschachtes für eine mehretagige Käfigbatterie mit drei übereinander verlaufenden Fütterungsbahnen,
Fig. 2 eine Seitenansicht des Teils eines Fallschachtes gemäß Fig. 1 und
Fig. 3 eine schematische Schnittansicht entlang der Linie III-III in Fig. 1.

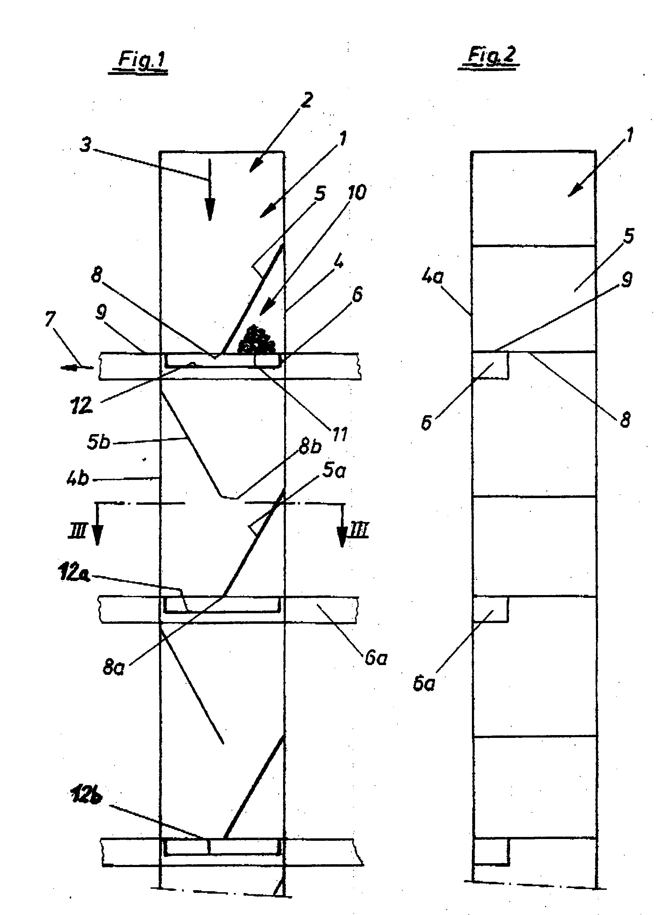

In Fig. 1 ist ein Teil eines Fallschachtes 1 schematisch dargestellt. Der Fallschacht weist Vierkantquerschnitt auf, d.h. seine Schachtwände begrenzen einen viereckigen freien Schachtquerschnitt. Von oben wird über eine nicht weiter dargestellte Einschüttöffnung 2 Futtermittel in den Fallschacht 1 eingegeben, das in Richtung des Pfeils 3 durch den Fallschacht 1 fällt. Ausgehend von der rechten Schachtwand 4 steht in den Fallschacht 1 ein Abweiser 5 vor, der als plattenartiges Blechteil ausgebildet ist und, wie hier dargestellt, in der durch den Pfeil 3 angegebenen Fallrichtung geneigt ist. Durch den Fallschacht 1 verläuft eine Fütterungsbahn 6, die in an sich bekannter Weise mit einem z.B. umlaufenden Förderelement ausgerüstet ist, so daß über die Fütterungsbahn 6 Futtermittel aus dem Fallschacht 1 abgezogen werden kann. Das abgezogene Futtermittel wird in Richtung des Pfeils 7 den Käfigen einer Käfigreihe einer Käfigbatterie zugeführt.

Der Abweiser 5 ist, wie hier dargestellt, oberhalb der Fütterungsbahn 6 derart angeordnet, daß seine freie Kante 8 abstreiferartig an den Rändern 9 der oben offenen Fütterungsbahn 6 anliegt. Dadurch ist unter dem Abweiser ein Hohlraum 10 ausgebildet, in dem sich von der Fütterungsbahn 6 zurückgeführtes unverbrauchtes Futtermittel gegebenenfalls aufstauen kann, wie es durch die Futtermittelanhäufung 11 angedeutet ist.

Für eine darunterliegende Käfigreihe der Käfigbatterie ist die Fütterungsbahn 6a vorgesehen, der ein Abweiser 5a, wie vorbeschrieben, zugeordnet ist. Von der der Schachtwand 4a gegenüberliegenden Schachtwand 4b steht im Bereich unmittelbar unter der oberen Fütterungsbahn 6 ein zweiter Abweiser 5b vor, und zwar alternierend zu den Abweisern 5 und 5a. Unterhalb der zweiten Fütterungsbahn 6a schließt sich ein ebenfalls mit zwei Abweisern ausgerüsteter gleichartig ausgebildeter weiterer Abschnitt des Fallschachtes an.

Mit 12,12a und 12b sind Ausklinkungen in den dem Schachtinneren zugekehrten Rändern der Fütterungsbahnen 6,6a bezeichnet. Die Ausklinkungen befinden sich im Bereich zwischen den Fütterungsbahnen zugeordneten Schachtwanddurchlässen. Jede Ausklinkung reicht bis etwa auf die Höhe des in der Fütterungsbahn verlaufenden Fördermittels hinab.

Der Fallschacht kann, entsprechend ausgebildet, beliebig verlängert werden.

Fig. 2 zeigt eine Seitenansicht des in Fig. 1 dargestellten Teils eines Fallschachtes 1. Fig. 2 zeigt, daß jede Fütterungsbahn 6,6a usw. an einer Schachtwand 4a entlang durch den Fallschacht 1 verläuft, wobei die freie Kante 8 des Abweisers 5 abstreiferartig an den Rändern 9 der oben offenen Fütterungsbahn 6 anliegt.

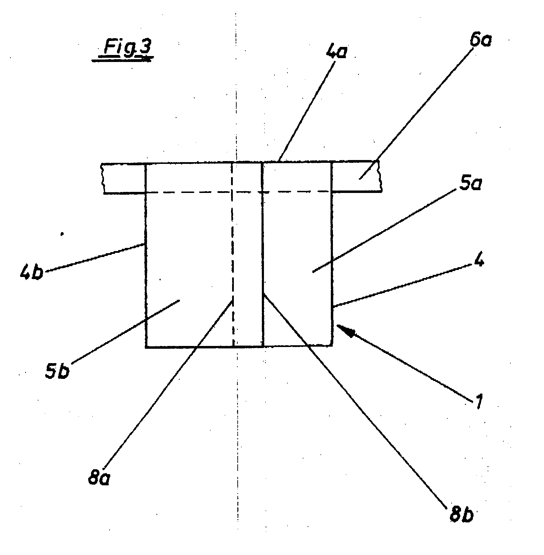

Fig. 3 zeigt einen Schnitt entlang der Linie III-III in Fig. 1 und verdeutlicht, wie die Fütterungsbahn 6a durch den Fallschacht 1 entlang der Schachtwand 4a verläuft. Die Abweiser 5a und 5b sind in Fig. 3 in einer Anordnung dargestellt, bei der ihre freien Kanten 8a,8b in Fallrichtung überlappt sind.

## Patentansprüche

1. Fallschacht (1) zur Verteilung von rieselfähigem Schüttgut, insbesondere Futtermittel, auf wenigstens eine, vorzugsweise mehrere übereinander verlaufende, mit einem Fördermittel ausgerüstete Fütterungsbahn(en) (6) einer ein-, vorzugsweise mehretagigen Käfigbatterie für Nutztiere, insbesondere Geflügel, mit einer oberen Einschüttöffnung (2), mit horizontalen Schachtwanddurchlässen für jede Fütterungsbahn und mit in den Fallschacht (1) vorstehenden Abweisern (5,5a,5b), die in Fallrichtung des Schüttguts geneigt sind,
**dadurch gekennzeichnet**,
daß wenigstens ein Abweiser (5,5a) oberhalb jeder Fütterungsbahn (6,6a) derart angeordnet ist, daß eine freie Kante (8,8a) des Abweisers abstreiferartig an den Rändern (9) der oben offenen Fütterungsbahn (6,6a) anliegt.

2. Fallschacht nach Anspruch 1, dadurch gekennzeichnet, daß jeder Abweiser (5,5a,5b) ein flächiges Plattenteil ist, welches zu etwa 3/4 seines Umfangs von angrenzenden Schachtwänden (4,4a,4b) umgeben ist.

3. Fallschacht nach Anspruch 1 und 2, dadurch gekennzeichnet, daß jeder Abweiser (5,5a,5b) in einem Winkel von 20 - 45° zu einer Schachtwand (4) geneigt ist.

4. Fallschacht nach einem der vorhergehenden Ansprüche, dadurch gekennzeichnet, daß die Abweiser (5,5a,5b) alternierend in den Fallschacht (1) vorstehend angebracht sind.

5. Fallschacht nach Anspruch 4, dadurch gekennzeichnet, daß die freien Kanten (8,8a) einander benachbarter Abweiser (5,5a,5b) in Fallrichtung überlappt sind.

6. Fallschacht nach einem der vorhergehenden Ansprüche, dadurch gekennzeichnet, daß zwischen zwei Fütterungsbahnen (6, 6a) zwei Abweiser (5a,5b) angeordnet sind.

7. Fallschacht nach einem der Ansprüche 1 bis 6, dadurch gekennzeichnet, daß er vierkantig ausgebildet ist.

8. Fallschacht nach einem der vorhergehenden Ansprüche, dadurch gekennzeichnet, daß jede Fütterungsbahn (6,6a) an einer Schachtwand (4a) entlang durch den Fallschacht (1) verläuft.

9. Fallschacht nach einem der Ansprüche 1 bis 8, dadurch gekennzeichnet, daß der Rand (9) jeder Fütterungsbahn (6,6a) im Bereich zwischen zugeordneten Schachtwanddurchlässen eine Ausklinkung (12,12a,12b) aufweist.

10. Fallschacht nach Anspruch 9, dadurch gekennzeichnet, daß eine Ausklinkung (12,12a,12b) bis auf die Höhe des Fördermittels hinabreicht.

## Claims

1. A chute (1) for distributing pourable bulk material, in particular feed, onto at least one feeding channel (6) - preferably a plurality of feeding channels (6) running one above the other - equipped with a conveyor, of a single-layer, preferably multi-layer, battery cage for commercial animals, in particular poultry, the chute having an upper charging opening (2), having horizontal chute-wall-openings for each feeding channel and having deflectors (5, 5a, 5b) which project into the chute (1) and are inclined in the direction of fall of the bulk material, characterised in that at least one deflector (5, 5a) is arranged above each feeding channel (6, 6a) in such a manner that a free edge (8, 8a) of the deflector contacts - in the manner of a scraper - the edges (9) of the feeding channel (6, 6a) open at the top.

2. A chute in accordance with Claim 1, characterised in that each deflector (5, 5a, 5b) is a planar plate part surrounded on approximately 3/4 of its periphery by adjacent chute walls (4, 4a, 4b).

3. A chute in accordance with Claim 1 and 2, characterised in that each deflector (5, 5a, 5b) is inclined at an angle of 20 - 45° to a chute wall (4).

4. A chute in accordance with any one of the preceding Claims, characterised in that the deflectors (5, 5a, 5b) are attached to project alternately into the chute (1).

5. A chute in accordance with Claim 4, characterised in that the free edges (8, 8a) of neighbouring deflectors (5, 5a, 5b) overlap in the direction of fall.

6. A chute in accordance with any one of the preceding Claims, characterised in that two deflectors (5a, 5b) are arranged between two feeding channels (6, 6a).

7. A chute in accordance with any one of Claims 1 to 6, characterised in that it is square.

8. A chute in accordance with any one of the preceding Claims, characterised in that each feeding channel (6, 6a) runs through the chute (1) along a chute wall (4a).

9. A chute in accordance with any one of Claims 1 to 8, characterised in that the edge (9) of each feeding channel (6, 6a) has a notch (12, 12a, 12b) in the region between associated chute wall openings.

10. A chute in accordance with Claim 9, characterised in that a notch (12, 12a, 12b) extends down to the level of the conveyor.

## Revendications

1. Trémie (1) pour la distribution de produits pulvérulents ou granuleux, en particulier d'aliments pour animaux, sur au moins une mangeoire (6), de préférence plusieurs superposées, équipée(s) d'un moyen de transport, d'une batterie de cages à un étage, de préférence plusieurs étages, pour animaux domestiques, en particulier volailles, comportant une ouverture de chargement (2) supérieure, comportant des passages horizontaux à travers les parois de la trémie pour chaque mangeoire et comportant des déflecteurs (5, 5a, 5b) s'engageant dans la trémie (1), qui sont inclinés dans le sens de la chute des produits en vrac, caractérisée en ce qu'un déflecteur (5, 5a) au moins est placé au-dessus de chaque mangeoire (6, 6a) de manière qu'un bord (8, 8a) libre du déflecteur s'applique à la manière d'un racloir contre les bords (9) de la mangeoire (6, 6a) ouverte à sa partie supérieure.

2. Trémie selon la revendication 1, caractérisée en ce que chaque déflecteur (5, 5a, 5b) est un élément en plaque qui est entouré sur 3/4 environ de sa périphérie par des parois (4, 4a, 4b) adjacentes de la trémie.

3. Trémie selon les revendications 1 et 2, caractérisée en ce que chaque déflecteur (5, 5a, 5b) est incliné sous un angle de 20 à 45° par rapport à une paroi (4) de la trémie.

4. Trémie selon l'une des revendications précédentes, caractérisée en ce que les déflecteurs (5, 5a, 5b) sont montés de manière à pénétrer en alternance dans la trémie (1).

5. Trémie selon la revendication 4, caractérisée en ce que les bords (8, 8a) libres des déflecteurs (5, 5a, 5b) voisins les uns des autres se recouvrent dans le sens de la chute.

6. Trémie selon l'une des revendications précédentes, caractérisée en ce que deux déflecteurs (5a, 5b) sont placés entre deux mangeoires (6, 6a).

7. Trémie selon l'une des revendications 1 à 6, caractérisée en ce qu'elle est carrée.

8. Trémie selon l'une des revendications précédentes, caractérisée en ce que chaque mangeoire (6, 6a) traverse la trémie (1) le long d'une paroi (4a).

9. Trémie selon l'une des revendications 1 à 8, caractérisée en ce que le bord (9) de chaque mangeoire (6, 6a) présente une encoche (12, 12a, 12b) dans la zone comprise entre leurs passages à travers les parois de la trémie.

10. Trémie selon la revendication 9, caractérisée en ce qu'une encoche (12, 12a, 12b) s'étend jusqu'à hauteur du moyen de transport.
